# EUROPEAN PATENT APPLICATION

(11) **EP 4 635 756 A1**
(43) Date of publication of application: **22.10.2025**
(21) Application number: 24170968.2
(22) Date of filing: 18.04.2024
(51) Int. Cl.: B60C 11/03, B60C 11/12, B60C 11/13

(54) **TIRE HAVING AN IMPROVED PATTERN**

(71) Applicant: Bridgestone Europe NV/SA, 1930 Zaventem (BE)
(72) Inventor: TOSCANO, Marco, 00128 Rome (IT)
(74) Representative: Bardehle Pagenberg Partnerschaft mbB Patentanwälte Rechtsanwälte

(57) **Abstract**

The tread may comprise a set of blocks arranged along a circumference of the tire, wherein the set of blocks comprises a first block and a second block, wherein the first block is arranged consecutive to the second block. The tread my further comprise a first groove (14) arranged between the first block and the second block and a circumferential groove (22) extending along the circumference of the tire, wherein the circumferential groove is arranged to separate each of the first block and the second block into a respective outward-facing portion (102, 122) and a respective inward-facing portion (104, 124). The circumferential groove (22) may face an inward-facing edge (1022, 1222) of the outward-facing portion (102, 122) and an outward-facing edge (1242, 1042) of the inward-facing portion (104, 124) of each of the first and second block. The arrangement may be such that at least one of the following applies:
(i) the inward-facing edge (1022) of the outward-facing portion (102) of first block is axially offset with respect to the inward-facing edge (1222) of the outward-facing portion (122) of the second block by a first axial offset (1020); or

(ii) the outward-facing edge (1042) of the inward-facing portion (104) of first block is axially offset with respect to the outward-facing edge (1242) of the inward-facing portion (124) of the second block by a second axial offset (1040).

## Description

### Technical field

The present invention relates to a vehicle tire. One possible application of the disclosed tire relates to a winter tire intended to equip a commercial van vehicle or a light truck. The disclosure can also be applied to other tires, for example all-season tires or tires for off road applications.

### Background

Snow- and ice-covered road surfaces bear several challenges for the grip of tires thereon due to the decreased friction between the tire and the road surface. This may cause difficulties in braking and accelerating of a vehicle, since tire grip is essential for those processes. Moreover, a vehicle's steering capability may be impaired by ice and or snow for similar reasons.

Furthermore, temperatures in winter are often lower than in summer, in some regions to the extent of some tens of degrees below o°C in winter. As temperatures drop, close to the point where the glass transition temperature of the tire's rubber is approached, the rubber becomes stiffer, further impairing the tire's braking, accelerating and steering capability.

From the prior art, several tires are known which deal with winter conditions by providing a more flexible rubber material, material having a lower glass transition temperature, or more flexible tread patterns to overcome the above-identified problems.

However, such tires have worse wear conditions than comparable summer tires, meaning that the tread profile wears off faster than when using harder material or less flexible tread patterns.

Therefore, it is an object of the present invention to provide a tire that provides good driving properties on snow- and ice-covered road surfaces while also providing long durability.

Moreover, softer tread patterns often provide worse traction on dry and wet road surfaces doe to the larger flexibility of the pattern.

It is therefore a further object of the invention to provide a tire providing good driving properties on snow- and ice-covered road surfaces without impairing traction on dry and wet grounds.

### Summary of the invention

This object is achieved by providing an improved vehicle tire according to the independent claim. Preferred embodiments are described in the dependent claims.

According to aspects of the invention, a tire for a vehicle comprising a tread is provided. The tread comprises a set of blocks arranged along a circumference of the tire, wherein the set of blocks comprises a first block and a second block, wherein the first block is arranged consecutive to the second block. The tread further comprises a first groove arranged between the first block and the second block and a circumferential groove extending along the circumference of the tire. The circumferential groove is arranged to separate each of the first block and the second block into a respective outward-facing portion and a respective inward-facing portion. The circumferential groove faces an inward-facing edge of the outward-facing portion and an outward-facing edge of the inward-facing portion of each of the first and second block. The arrangement is such that at least one of the following applies:
(i) the inward-facing edge of the outward-facing portion of first block is axially offset with respect to the inward-facing edge of the outward-facing portion of the second block by a first axial offset; or
(ii) the outward-facing edge of the inward-facing portion of first block is axially offset with respect to the outward-facing edge of the inward-facing portion of the second block by a second axial offset.

The circumferential groove may allow water to be transported therein, such as to clear a contact patch of the tire with the road surface of water, thus mitigating the risk of aquaplaning. However, conventional circumferential grooves having continuous edges provide for worse traction on snow-covered roads, because the smooth continuous edges of the circumferential groove do not allow the trapping of snow.

By axially offsetting at least one of the inward-facing edges of the outward-facing portions of the two blocks or the outward-facing edges of the inward-facing portions of the two blocks, a step is provided in the circumferential groove, such that snow can be trapped therein at least to some extent.

Thus, the circumferential groove provides for a mitigation of the risk of aquaplaning, while the axial offset allows for improved traction on snow-covered roads. Hence, the tire according to the claimed invention provides for an improved trade-off between wet and snow traction.

Moreover, the feature of the axially offset edges which provides for the trapping of snow may be implemented independently of the flexibility of the pattern. Thus, the improved snow traction provided by the axial offset of the edges allows a tire designer to implement a less flexible tire pattern and/or a less flexible rubber compound without losing performance on snow-covered roads. This in turn may reduce the wear of the tire, making the tire more durable. Hence, in addition to the enhanced snow and wet performance of the tire, the claimed invention may also provide for an enhanced trade-off between snow performance and tire wear.

### Brief description of the Figures

Fig. 1 shows a sketch of a vehicle tire according to aspects of the present disclosure.
Fig. 2 illustrates a flat image of a full tread pattern of a tire according to aspects of the present disclosure.
Fig. 3 illustrates two views of an extract of the flat image of the full tread of Fig. 2 according to aspects of the present disclosure.
Fig. 4 illustrates two views of another extract of the flat image of the full tread of Fig. 2 according to aspects of the present disclosure.
Fig. 5 illustrates yet another extract of the flat image of the full tread of Fig. 2 according to aspects of the present disclosure.
Fig. 6 illustrates a flat image of a full tread pattern having one or more sipes according to aspects of the present disclosure.

### Detailed Description

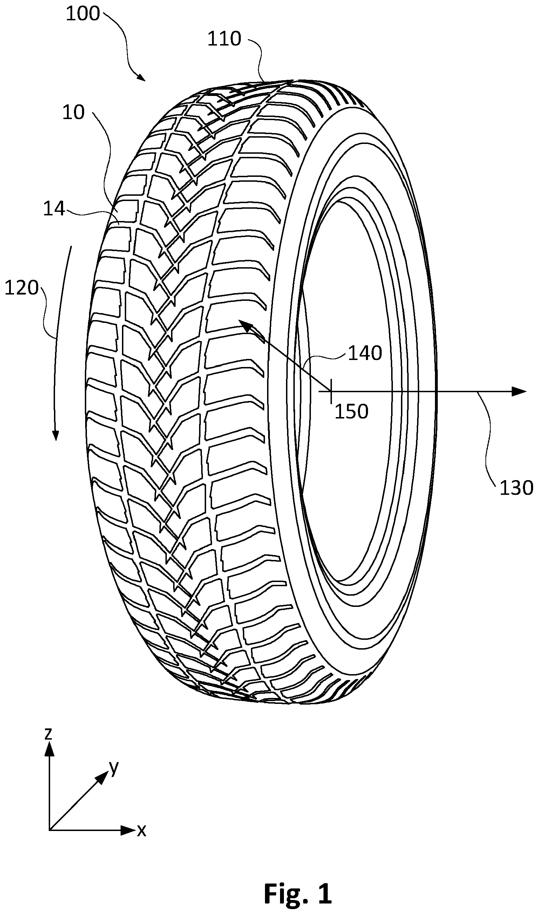

**Fig. 1** shows a sketch of a vehicle tire according to the present disclosure.

According to Fig. 1, the tire 100 comprises a tread 110. The tread comprises a set of consecutive blocks 10 as well as a plurality of grooves 14, each groove 14 arranged between two blocks 10 of the set of consecutive blocks. Moreover, one or more sipes may be arranged within each of the set of consecutive blocks 10.

The blocks and/or grooves may be arranged consecutively along a circumferential direction 120 of the tire.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example, a depth of least 1 mm, preferably at least 3 mm, is considered.

A "sipe" also represents an incision in the tread pattern. Reference herein to a "sipe" means an incision within a block, rather than a "groove" that separates blocks. For example, the width of sipe may also be smaller than the width of a groove, and be for example of less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full tread block depth, but this does not necessarily have to be the case. For example, a depth of at least 1 mm, preferably at least 20% of the depth of the first grooves, is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and therefore perpendicular to the yz-plane.

Within the context of the present disclosure, "radial direction" 140 means a direction perpendicular to the axial direction. The radial direction is parallel to a connection line of a center 150 of the tire with the tread surface. Thus, the radial direction is within a plane parallel to the yz-plane and generally perpendicular to both the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Any numeral angles given herein are to be considered absolute values, i.e., not limiting to the orientation of the respective angle.

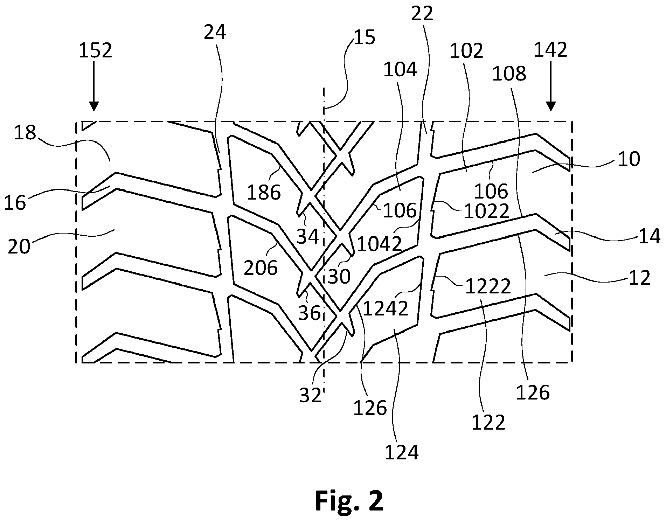

**Fig. 2** illustrates a flat image of a full tread pattern of a tire according to an exemplary embodiment of the present disclosure. The tread pattern of Fig. 2 may for example be placed on the tire of Fig. 1.

According to Fig. 2, the tread may comprise a set of blocks arranged along a circumference of the tire, wherein the set of blocks comprises a first block 10 and a second block 12, wherein the first block 10 is arranged consecutive to the second block 12.

In some embodiments the tread may comprise blocks on both sides of the equatorial plane 15 of the tire. In some embodiments, these blocks may have axisymmetric configuration, such that the overall pattern is V-Shaped. In other embodiments, the blocks on both sides of the equatorial plane may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns have substantially different tread configurations on both sides of the equatorial plane of the tire.

Generally, the blocks 10, 12 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, braking or steering.

According to Fig. 2, the tread may further comprise a first groove 14 arranged between the first block and the second block.

"Consecutive blocks" within the context of this disclosure means that the tread comprises multiple blocks following one another in succession over the circumference of the tire. While it is preferred that the invention according to the present disclosure is provided for all grooves of the tire, it is possible that some individual grooves, which may be arranged between other grooves of the plurality of grooves, are not arranged as described herein.

Preferably, the first groove 14 may extend from a central portion towards a first shoulder 142 of the tread. The shoulder of a tire may sometimes also be referred to as "shoulder end", "shoulder region", "shoulder portion" or "side portion". Thus, the first groove 14 may start near the equatorial plane 15 and may open at a first axial outer edge of the tire. The first groove 14 may be generally delimited by the first block 10 and the second block 12, and more precisely by the two blocks' 10, 12 respective edges facing towards the first groove 14. Hence, the first groove 14 may be arranged between a first edge 126 of the second block 12 and a second edge 108 of the first block 10.

The tread may further comprise a second groove 16 extending from the central portion to a second shoulder 152 of the tire. Thus, the second groove 16 may start near the equatorial plane 15 and may open at a second axial outer edge of the tire.

In some aspects of the disclosure, the second groove 16 may be arranged between a third block 18 and a fourth block 20. The second groove 16 may be generally delimited by the third block 18 and the fourth block 20, and more precisely by the two blocks' 18, 20 respective edges facing towards the second groove 16.

The purpose of the first groove 14 and the second groove 16 is mainly the drainage of water from the contact patch by guiding the water along the respective first or second groove towards the respective first or second shoulder of the tire and eject the water from there, as the tire rolls on the ground. Thus, the first and second groove provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

In some aspects of the present disclosure, the first groove 14 may extend substantially on one side of the equatorial plane 15 of the tire and the second groove 16 may extend substantially on the other side of the equatorial plane 15 of the tire. In some aspects of the present disclosure, the second groove 16 may intersect the first groove 14.

The above-described arrangement, i.e., an arrangement of blocks and grooves, comprising a first block 10, a second block 12, a first groove 14, a third block 18, a fourth block 20 and a second groove 16 may repeat itself over the entire circumference of the tire.

In some aspects of the present disclosure, the tread may further comprise a circumferential groove 22 extending along the circumference of the tire. A circumferential groove or the edges thereof may be inclined with respect to the equatorial plane by an angle of 45° or less.

The circumferential groove may be arranged to separate each of the first block 10 and the second block 12 into a respective outward-facing portion and a respective inward-facing portion. Thus, the circumferential groove 22 may separate the first block 10 into an outward-facing portion 102 and an inward-facing portion 104. Moreover, the circumferential groove 22 may separate the second block 12 into an outward-facing portion 122 and an inward-facing portion 124.

The circumferential groove may thus face an inward-facing edge 1022 of the outward-facing portion 102 and an outward-facing edge 1042 of the inward-facing portion 104 of the first block 10. Moreover, the circumferential groove 22 may face an inward-facing edge 1222 of the outward-facing portion 122 and an outward-facing edge 1242 of the inward-facing portion 124 of the second block 12.

The circumferential groove 22 may be arranged to reach around the entire circumference of the tire. In some aspects of the present disclosure, the circumferential groove may be arranged at one side of the equatorial plane 15. Moreover, the tread may comprise a second circumferential groove 24 arranged on the other side of the equatorial plane 15.

In some aspects of the present disclosure, the first block 10 may comprise at least one recess 30 incising a first edge 106 of the first block 10. In some aspects of the present disclosure, the second block 12 may also comprise a recess 32 incising a first edge 126 of the second block 12.

In some aspects, similar recesses 34, 36 may also be provided in the third block 18 and the fourth block 20. For example, the third block 18 may comprise a recess 34 incising a first edge 186 of the third block 18. Additionally or alternatively, the fourth block 20 may comprise a recess 36 incising a first edge 206 of the fourth block 20.

In some aspects of the present disclosure, the tread may have a V-shaped directional pattern.

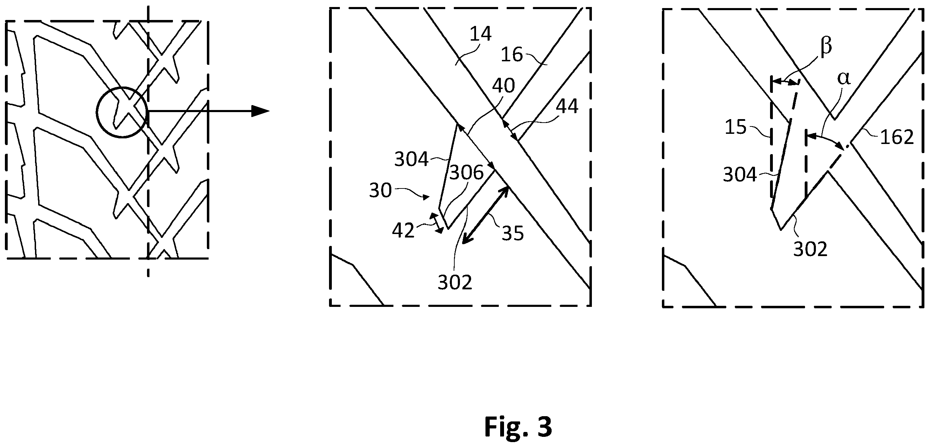

**Fig. 3** illustrates two views of an extract of the flat image of the full tread of Fig. 2 according to aspects of the present disclosure. More particularly, Fig. 3 illustrates an enlarged view of recess 30 of Fig. 2. However, the recess illustrated in Fig. 3 may correspond to any one of recesses 30, 32, 34, 36 as discussed with respect to Fig. 2.

According to Fig. 3, the recess 30 may have a radial axis (not shown) which describes extension of the recess in radial direction, for example, along the depth of the first groove 14. Hence in Fig. 3, the radial axis may extend into the drawing plane.

Furthermore, the recess 30 may have a longitudinal axis 35 substantially perpendicular to the radial axis. That is, the longitudinal axis may be arranged along the extension of the recess into the block, parallel to a tangential plane of the tire. In some aspects, the longitudinal axis 35 may be parallel to a first longitudinal edge 302 of the recess 30 or to a second longitudinal edge 304 of the recess 30. In some aspects, the longitudinal axis 35 of the recess 30 may be perpendicular to an edge of the first groove 14.

The recess 30 may taper along its longitudinal extension into the first block 10. The "longitudinal extension" of the recess 30 may correspond to the extension of the recess along the longitudinal axis 35.

That is, an inclination angle with the equatorial plane of the first longitudinal edge 302 of the recess 30 may differ from the inclination angle with the equatorial plane of the second longitudinal edge 304 of the recess 30.

The tapering construction of the recess 30 provides for several advantages:
Firstly, the different inclination angles of the first longitudinal edge 302 and the second longitudinal edge 304 provide additional edges for traction of the tire on snow-covered surface. Edges of the tread generally provide traction forces, when a force is provided perpendicular to the edge, but provide little to no additional traction when a force is directed along the edge. Thus, an additional edge provides for additional traction, particularly on snow- and ice-covered roads, if there is an angle between the edge and the direction of the force applied. Because the longitudinal edges of recess 30 have different inclination angles, even if a force is applied parallel to one edge, the second edge will not be parallel to the force. Therefore, independent of the direction of the force applied, at least one of the two longitudinal edges of recess 30 provides an additional traction force.
Secondly, the arrangement of the recess 30 with tapering longitudinal edges allows the trapping of snow therein. The different inclination angles of the two longitudinal edges enhances the capability of the recesses to trap snow therein as compared to parallel longitudinal edges. The trapping of snow then provides for enhanced traction of the tire on snow-covered road surfaces. Therefore, by means of the tapering recess 30, snow-traction can be improved.

Furthermore, since the tapering recess allows for the trapping of snow, enhanced winter performance can already be achieved without a need for a very soft or flexible tread (e.g. in terms of pattern or rubber compound). Therefore, a less flexible tread can be used for the tire design, and thus the durability of the tire can be enhanced. Consequently, the tapering recess further provides for an improved trade-off between snow traction and tire durability.

Additionally, because a stiffer tread (e.g. in terms of tread pattern or rubber compound) can be used without impairing snow traction, the tapered recesses also provide for an improved trade-off between traction on snow-covered roads and traction on wet/dry roads.

Lastly, the tapering of the recess allows for the recess having a greater width at the groove, and a narrower width at a distal end of the recess 30. This enhanced width near the edge of the first groove 14 provides for enhanced water guidance capability. That is, water travelling through the first groove 14 will be in the form of a stream of water. As this stream passes the recess 30, turbulences in the water stream are likely to occur. These turbulences are capable of disturbing the water stream, thus impairing the capability of the tread to guide water out of the contact patch, such that the risk for aquaplaning can be increased. By providing the recess in a tapered manner, particularly with the greater width near the groove, enough space is provided to accommodate any occurring turbulences, such that the water stream is not disturbed, and aquaplaning can be prevented in an efficient manner.

In some embodiments, the first edge 106 may be a trailing edge. Providing the recess 30 at the trailing edge allows for especially enhanced braking behavior on snow-covered grounds, because the trailing edge of blocks mainly contributes to braking performance of the tire.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "braking edge", refers to the edge of the block that, when a longitudinal braking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

In some embodiments, the recess 30 may have a depth measured in radial direction which is substantially equal to a skid depth of the tread. "Substantially equal" may mean that the depth of the recess 30 may be either equal to the skid depth, or the depth of the recess may deviate from the skid depth by at most 10%.

Providing the recess at "full depth", i.e., at substantially equal depth increases the amount of snow that can be trapped therein. Moreover, it enhances the amount of space to accommodate any water turbulences, thus providing for enhanced traction properties of the tire on snowy and wet roads.

As discussed above, in some embodiments, the first groove 14 may extend from a central portion to a first shoulder of the tire, and the tire may further comprise a second groove 16 extending from the central portion to a second shoulder of the tire. The second groove 16 may intersect the first groove 14, and the second groove 16 may extend at least partly into the recess 30.

This allows for an even further enhanced capability of the tread to remove water from the contact path of the tire, because this way any turbulent water stream occurring in or near the recess can be ejected through both the first groove 14 and the second groove 16.

Preferably, the recess has a first longitudinal edge 302 which is substantially parallel to an edge 162 of the second groove 16 and a second longitudinal edge 304 which is unparallel to the edge 162 of the second groove 16. "Substantially parallel" may mean an angular difference between the two edges of 10° or lower, preferably 1° or lower.

This even further enhances the water ejection capability of the tread.

In some embodiments, an inclination angle α of the first longitudinal edge with an equatorial plane of the tire may be at least 34° and at most 42°, preferably at least 36° and at most 41°, more preferably at least 37 and at most 40°, even more preferably at least 38° and at most 40°.

In some embodiments, an inclination angle β of the second longitudinal edge with the equatorial plane of the tire is smaller than the inclination angle α of the first longitudinal edge with the equatorial plane. In some embodiments, β may be at least 8° and at most 18°, preferably at least 10° and at most 16°, more preferably at least 11° and at most 15°, even more preferably at least 12° and at most 14°.

In some embodiments, a difference between α and β may be α - β ≥ 19°, more preferably α - β ≥ 22°, even more preferably α - β ≥ 25°.

These angular values provide for particularly good braking behavior on snow-covered grounds, for forces applied in various directions.

In some embodiments the recess 30 may terminate at a distal edge 306. The recess 30 may have a first width 40 measured at and along the first edge 106 and a second width 42 measured at and along the distal edge 306 of the recess 30. The first width 40 may be greater than the second width 42, preferably the first width 40 may be at least twice the second width 42.

In some embodiments, the second groove 16 may have a third width 44 measured perpendicular to the edge 162 of the second groove 16, the third width 44 being lower than or equal to half of the first width 40 of the recess 30.

These widths provide for particularly good water ejection properties.

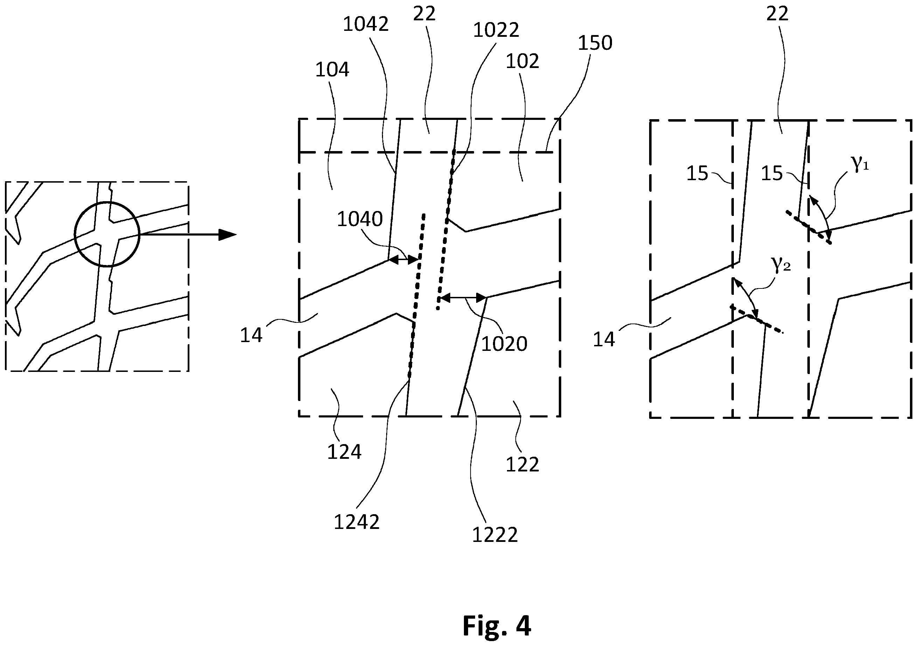

**Fig. 4** illustrates two views of another extract of the flat image of the full tread of Fig. 2 according to aspects of the present disclosure. More particularly, Fig. 4 illustrates an enlarged view of the circumferential groove 22, particularly an arrangement of an inward-facing edge of an outward-facing portions of the first and second block, as well as of the outward-facing edges of the inward-facing portions of the first and second block, as described briefly with respect to Fig. 2.

According to Fig. 4, the arrangement may be such that at least one of the following applies:
(i) the inward-facing edge 1022 of the outward-facing portion 102 of first block 10 may be axially offset with respect to the inward-facing edge 1222 of the outward-facing portion 122 of the second block 12 by a first axial offset 1020; or
(ii) the outward-facing edge 1042 of the inward-facing portion 104 of first block 10 may be axially offset with respect to the outward-facing edge 1242 of the inward-facing portion 124 of the second block 12 by a second axial offset 1040.

The circumferential groove may allow water to be transported therein, such as to clear a contact patch of the tire with the road surface of water, thus mitigating the risk of aquaplaning. However, conventional circumferential grooves having continuous edges provide for worse traction on snow-covered roads, because the smooth continuous edges of the circumferential groove do not allow the trapping of snow.

By axially offsetting at least one of the inward-facing edges of the outward-facing portions of the two blocks or the outward-facing edges of the inward-facing portions of the two blocks, a step is provided in the circumferential groove, such that snow can be trapped therein at least to some extent.

Thus, the circumferential groove provides for a mitigation of the risk of aquaplaning, while the axial offset allows for improved traction on snow-covered roads. Hence, the tire according to the claimed invention provides for a improved trade-off between wet and snow traction.

Moreover, the feature of the axially offset edges which provides for the trapping of snow may be implemented independently of the flexibility of the pattern. Thus, the improved snow traction provided by the axial offset of the edges allows a tire designer to implement a less flexible tire pattern and/or a less flexible rubber compound without losing performance on snow-covered roads. This in turn may reduce the wear of the tire, making the tire more durable. Hence, in addition to the enhanced snow- and wet performance of the tire, the claimed invention may also provide for an enhanced trade-off between snow performance and tire wear.

In some embodiments, both of (i) and (ii) may apply. In other words the arrangement may be such that
(i) the inward-facing edge 1022 of the outward-facing portion 102 of the first block 10 may be axially offset with respect to the inward-facing edge 1222 of the outward-facing portion 122 of the second block 12 by a first axial offset 1020; and
(ii) the outward-facing edge 1042 of the inward-facing portion 104 of first block 10 may be axially offset with respect to the outward-facing edge 1242 of the inward-facing portion 124 of the second block 12 by a second axial offset 1040.

In some embodiments, at least one of the first axial offset 1020 or the second axial offset 1040 may be smaller than a width of the circumferential groove 22 measured in axial direction. In some embodiments, the first axial offset 1020 and the second axial offset 1040 may be smaller than a width of the circumferential groove 22 measured in axial direction.

Thus, there may be at least a portion of the circumferential groove, which is substantially continuous, i.e., a portion, through which water can be guided along the circumferential groove 22.

In some embodiments, the first axial offset 1020 may be at least 40% and at most 90% of the width of the circumferential groove, preferably at least 50% and at most 85% of the width of the circumferential groove, more preferably at least 60% and at most 80% of the width of the circumferential groove. Additionally or alternatively, the second axial offset 1040 may be at least 30% and at most 80% of the width of the circumferential groove, preferably at least 40% and at most 75% of the width of the circumferential groove, more preferably at least 50% and at most 70% of the width of the circumferential groove.

These arrangements provide enhanced trade-off between traction on snow-covered roads and traction on wet roads.

To measure the axial offset, both the width of the second groove as well as the axial offset may be measured in axial direction. The percentages may then be calculated by dividing the measured absolute offset by the axial width of the second groove.

In some embodiments, the second block 12 may be arranged to contact the ground before the first block 10 in forward-rolling direction.

In some embodiments, the arrangement may be such that at least one of the following applies:
(i) the inward-facing edge 1022 of the outward-facing portion 102 of the first block 10 may be chamfered at a location where the inward-facing edge 1022 intersects with the first groove 14;
(ii) the outward-facing edge 1242 of the inward-facing portion 124 of the second block 12 may be chamfered at a location where the outward-facing edge 1242 intersects with the first groove 14;
(iii) the inward-facing edge 1222 of the outward-facing portion 122 of the second block 12 may be chamfered at a location where the inward-facing edge 1222 intersects with the first groove 14 (not shown in Fig. 4); or
(iv) the outward-facing edge 1042 of the inward-facing portion 104 of the first block 10 may be chamfered at a location where the outward-facing edge 1042 intersects with the first groove 14 (not shown in Fig. 4).

The chamfering provides additional edges, thus further enhancing the traction of the tire, particularly on snow-covered roads. Moreover, the chamfering provides more space for potential water turbulences, such that water ejection capabilities can be enhanced.

In some embodiments, the arrangement may be such that:
(i) the inward-facing edge 1022 of the outward-facing portion 102 of the first block 10 may be chamfered by a first angle γ₁ with respect to the equatorial plane of the tire at a location where the inward-facing edge 1022 intersects with the first groove 14;
(ii) the outward-facing edge 1242 of the inward-facing portion 124 of the second block 12 may be chamfered by a second angle γ₂ with respect to the equatorial plane 15 of the tire at a location where the outward-facing edge 1242 intersects with the first groove 14;
(iii) the inward-facing edge 1222 of the outward-facing portion 122 of the second block 12 may be unchamfered at a location where the inward-facing edge 1222 intersects with the first groove 14; and
(iv) the outward-facing edge 1042 of the inward-facing portion 104 of the first block 10 may be unchamfered at a location where the outward-facing edge 1042 intersects with the first groove 14.

This arrangement provides for particularly improved capability of guiding water along the circumferential groove 22.

In some embodiments, the first angle γ₁ may be different from the second angle γ₂, preferably by at least 2°, more preferably by at least 4°. These angles provide for enhanced water ejection capabilities. Moreover, the different angles ensure that traction of the tread is enhanced if a force is applied, irrespective of the direction of the force.

In some embodiments, the first angle γ₁ may be at least 118° and at most 124°, preferably 121°.

In some embodiments, the second angle γ₂ may be at least 122° and at most 128°, preferably 125°.

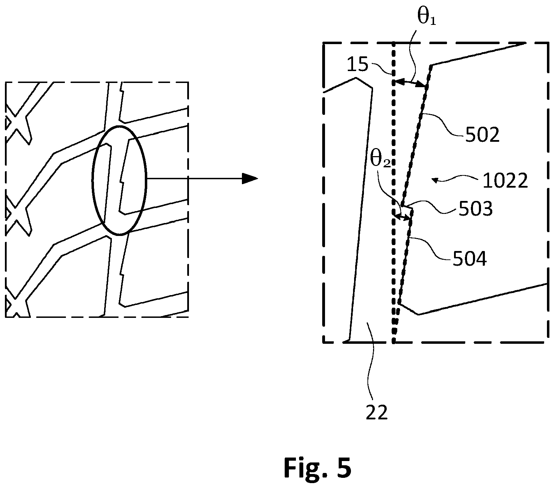

**Fig. 5** illustrates yet another extract of the flat image of the full tread of Fig. 2 according to aspects of the present disclosure.

According to Figure 5, at least one of the inward-facing edges or the outward-facing edges of each of the first and second block may comprise a discontinuity in circumferential direction such that the respective inward-facing or outward-facing edges are separated into a respective a first edge portion 502 and a respective second edge portion 504.

In some embodiments, the respective first edge portion and the respective second edge portion may be axially offset by a step 503. Thus, the respective edge may be in the shape of a lightning.

This profile allows for enhanced traction on snow-covered ground, as the step 503 allows for better trapping of snow within the circumferential groove 22.

In the exemplary embodiment of Fig. 5, the discontinuity is shown with respect to the inward-facing edge 1022 of the outward-facing portion 102 of the first block 10. However, it will be understood that a similar arrangement may be provided, alternatively or additionally, on respective inward-facing or outward-facing edges of portions of the first block 10, the second block 12, the third block 18 or the fourth block 20.

In some embodiments, the step may have a width measured in axial direction of at least 0.5 mm and at most 2 mm. In some preferred embodiments, the step may have a width measured in axial direction of at least 0.7 mm and at most 1.5 mm. In some preferred embodiments, the step may have a width measured in axial direction of at least 0.9 mm and at most 1 mm.

In some embodiments, the first edge portion 502 may make up at least 40% and at most 70%, preferably at least 50% and at most 60%, of the length of the respective edge, and/or the second edge portion 504 may make up at least 30% and at most 60%, preferably at least 40% and at most 50%, of the length of the respective edge. In some preferred embodiments, the second edge portion may come into contact with the ground before the first edge portion, when the tire rolls in forward direction. For example, the second edge portion may be arranged near a leading edge of the respective block, and the first edge portion may be arranged near a trailing edge of the respective block.

The length of each individual edge portion may be measured along said edge portion. The length of the respective edge may be measured as the shortest distance between two starting points of the edge. For example, the starting points may be the points at which the respective edge intersects with the first groove or the second groove, respectively. The percentages of the first and second edge portions may then be calculated by dividing the length of the respective edge portion by the length of the respective edge.

In some embodiments, an inclination angle θ₁ with the equatorial plane 15 of the first edge portion 502 may differ from an inclination angle θ₂ with the equatorial plane 15 of the second edge portion 504, preferably by at least 2°, more preferably by at least 5°. This difference in inclination angles provides for enhanced traction of the tire on snow, because irrespective of the direction of a force applied, at least one of the first and second edge portion will be arranged in an angle to the direction of the applied force, as described in more detail elsewhere herein.

In some embodiments, the first edge portion 502 may be inclined with respect to the equatorial plane 15 by an inclination angle θ₁ of at least 10° and at most 15°, preferably at least 12° and at most 14°, more preferably at least 13° and at most 13.5°.

In some embodiments, the second edge portion 504 may be inclined with respect to the equatorial plane 15 by an inclination angle θ₂ of at least 5° and at most 10°, preferably at least 6° and at most 8°, more preferably at least 6.5° and at most 7°.

These angles provide improved trade-off between the capability of trapping snow in the circumferential groove and the capability of guiding water through the circumferential groove. Thus, these angles provide enhanced trade-off between traction on snow-covered roads and traction on wet roads.

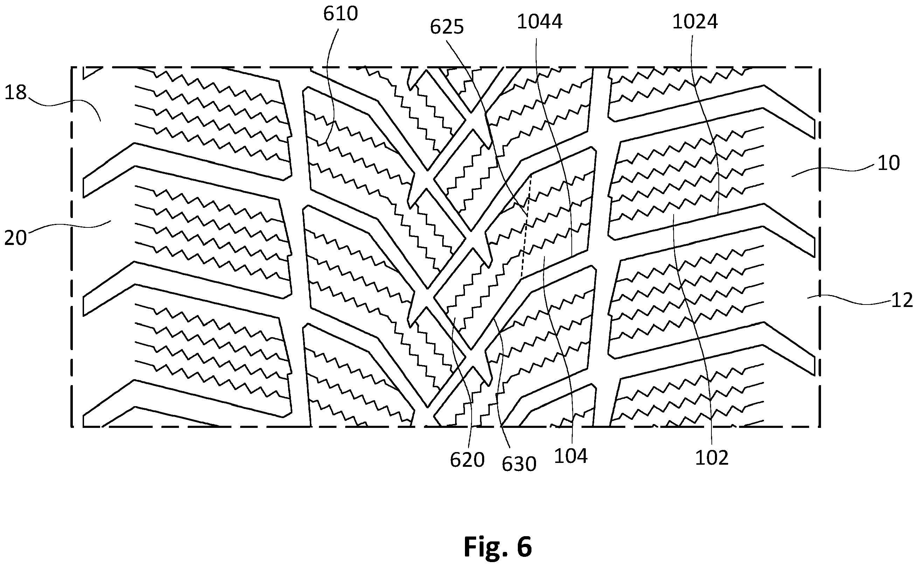

**Fig. 6** illustrates a flat image of a full tread pattern having one or more sipes according to aspects of the present disclosure.

According to Fig. 6, the blocks 10, 12, 18, 20 may comprise one or more sipes 610. As shown in Fig. 6, the sipes 610 may have a zig-zag shape. However, other arrangements and shapes of the sipes on the tread outer surface are also possible, for example wavy shapes, straight lines, or the like. Moreover, in some examples, the sipes may only be included along a part of the shape of the block, or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Some sipes may comprise protrusions near a bottom of the sipe. Sipes 610 are capable of trapping snow therein and providing an additional edge of the tread. This improves traction on snow-covered grounds.

**In** some embodiments, the outward-facing portion 102 of the first block 10 may be located adjacent to a first shoulder 142 of the tire. The outward-facing portion 102 of the first block 10 may comprise at least four sipes 610. The inward-facing portion 104 of the first block 10 may comprise less than four sipes 610.

**In** some embodiments, the first block may further comprise a third block portion 620 located axially inwardly with respect to the inward-facing portion 104 of the first block 10. The inward-facing portion 104 of the first block 10 may comprise three sipes, and the third block portion 620 may comprise less than three, preferably two, sipes.

In some embodiments, the arrangement of the sipes may be as follows:
(i) the sipes 610 in the outward-facing portion 102 of the first block 10 may be arranged substantially parallel to an edge 1024 of the outward-facing portion 102 of the first block 10 facing the first groove 14,
(ii) the sipes 610 in the inward-facing portion 104 of the first block 10 may be arranged substantially parallel to an edge 1044 of the inward-facing portion 104 of the first block 10 facing the first groove 14, and/or
(iii) the sipes 610 in the third block portion 620 of the first block 10 may be arranged substantially parallel to an edge 630 of the third block portion 620 of the first block 10 facing the first groove 14.

**In** some embodiments, the sipes 610 in the inward-facing portion 104 of the first block 10 may extend at least partly into the third block portion 620 of the first block 10.

In the embodiment of Fig. 6, the separations are defined by a change in inclination angle of the at least one edge of the first block facing the first groove to the equatorial plane. For example, in Fig. 6, the separation between the inward-facing portion 104 of the first block 10 and the third portion 620 of the first block 10 may be defined by separation line 625, intersecting the two break points of the block's leading edge and trailing edge.

However, it will be understood that other means for defining the individual block portions can be envisaged.

For example, in some embodiments, a separation between the third block portion and the inward-facing portion of the first block may be defined by either one of:
a recess in at least one edge of the first block facing the first groove;
a change in inclination angle of the at least one edge of the first block facing the first groove to the equatorial plane;
the direction or magnitude of curvature of the at least one edge facing the first groove;
a stepwise increase or decrease in chamfer width along the at least one edge facing the first groove;
a groove extending through the first block in substantial circumferential direction; or
a combination thereof.

Providing more sipes on the outward-facing portions of the blocks than on the inward-facing blocks and the third block portions provides for enhanced traction on snow-covered roads. The outward-facing block portions are most critical in terms of traction, especially on snow covered roads. Thus, the provision of four or more sipes on this outward-facing block portion enhances traction of the tire in an efficient manner and allows providing fewer sipes on the more inwardly portions, e.g. the inward-facing block portion and the third block portion. By providing the fewer sipes on the interior parts of the block, these tread parts are generally stiffer than the more outwardly parts with more sipes. Hence, the wear of the tire can be controlled especially for these inwardly-directed block portions. Thus, the particular arrangement of many sipes on the outermost block parts and fewer sipes in the inward block parts provides for a good trade-off between enhances traction on snow-covered roads and improved tire durability.

In such embodiments, where a recess 30 (as described with reference to Fig. 3) is provided, a first set of sipes may intersect the first longitudinal edge 302 and may extend in an angle of at least 65° and at most 85°, preferably at least 70° and at most 80°, more preferably at least 74° and at most 76° to the first longitudinal edge 302. In some embodiment, alternatively or additionally a second set of sipes may intersect the second longitudinal edge 304 and may extend in an angle of at least 70° and at most 90°, preferably at least 75° and at most 85°, more preferably at least 78° and at most 80°to the second longitudinal edge 304.

This provides particularly good traction on snow-covered grounds without negatively impacting the tire's durability.

### List of reference signs:

- 10: first block
- 12: second block
- 14: first groove
- 15: equatorial plane
- 16: second groove
- 18: third block
- 20: fourth block
- 22: circumferential groove
- 24: second circumferential groove
- 30, 32, 34,36: recesses
- 35: longitudinal axis
- 40: first width (of recess 30)
- 42: second width (of recess 30)
- 44: third width (of second groove 16)
- 100: tire
- 102,122: outward-facing portions
- 104,124: inward-facing portions
- 106, 126, 186, 206: first edges
- 108: second edge
- 110: tread
- 120: circumferential direction
- 130: axial direction
- 140: radial direction
- 142: first shoulder
- 150: center
- 152: second shoulder
- 162: edge (of the second groove 16)
- 302: first longitudinal edge
- 304: second longitudinal edge
- 306: distal edge
- 502: first edge portion
- 503: step
- 504: second edge portion
- 610: sipes
- 620: third block portion
- 625: separation line
- 630: edge (of the third block portion 620)
- 1020: first axial offset
- 1024: edge (of the outward-facing portion 102)
- 1022,1222: inward-facing edge
- 1040: second axial offset
- 1042,1242: outward-facing edge
- 1044: edge (of the inward-facing portion 104)

## Claims

1. A tire for a vehicle comprising a tread, the tread comprising:
a set of blocks arranged along a circumference of the tire, wherein the set of blocks comprises a first block and a second block, wherein the first block is arranged consecutive to the second block;
a first groove arranged between the first block and the second block,
a circumferential groove extending along the circumference of the tire, wherein the circumferential groove is arranged to separate each of the first block and the second block into a respective outward-facing portion and a respective inward-facing portion;
wherein the circumferential groove faces an inward-facing edge of the outward-facing portion and an outward-facing edge of the inward-facing portion of each of the first and second block;
wherein the arrangement is such that at least one of the following applies:
(i) the inward-facing edge of the outward-facing portion of first block is axially offset with respect to the inward-facing edge of the outward-facing portion of the second block by a first axial offset; or
(ii) the outward-facing edge of the inward-facing portion of first block is axially offset with respect to the outward-facing edge of the inward-facing portion of the second block by a second axial offset.

2. The tire of claim 1, wherein
(i) the inward-facing edge of the outward-facing portion of the first block is axially offset with respect to the inward-facing edge of the outward-facing portion of the second block by a first axial offset; and
(ii) the outward-facing edge of the inward-facing portion of first block is axially offset with respect to the outward-facing edge of the inward-facing portion of the second block by a second axial offset.

3. The tire of any of the preceding claims, wherein at least one of the first axial offset or the second axial offset is smaller than a width of the circumferential groove measured in axial direction.

4. The tire of claim 3, wherein the first axial offset is at least 40% and at most 90% of the width of the circumferential groove, preferably at least 50% and at most 85% of the width of the circumferential groove, more preferably at least 60% and at most 80% of the width of the circumferential groove,
and/or wherein the second axial offset is at least 30% and at most 80% of the width of the circumferential groove, preferably at least 40% and at most 75% of the width of the circumferential groove, more preferably at least 50% and at most 70% of the width of the circumferential groove.

5. The tire of any of the preceding claims, wherein the first block is arranged to contact ground before the second block in forward-rolling direction.

6. The tire of any one of the preceding claims, wherein the arrangement is such that at least one of the following applies:
(i) the inward-facing edge of the outward-facing portion of the first block is chamfered at a location where the edge intersects with the first groove;
(ii) the outward-facing edge of the inward-facing portion of the second block is chamfered at a location where the edge intersects with the first groove;
(iii) the inward-facing edge of the outward-facing portion of the second block is chamfered at a location where the edge intersects with the first groove; or
(iv) the outward-facing edge of the inward-facing portion of the first block is chamfered at a location where the edge intersects with the first groove.

7. The tire of any of claims 1 to 5, wherein
(i) the inward-facing edge of the outward-facing portion of the second block is chamfered by a first angle with respect to the equatorial plane of the tire at a location where the inward-facing edge intersects with the first groove;
(ii) the outward-facing edge of the inward-facing portion of the first block is chamfered by a second angle with respect to the equatorial plane of the tire at a location where the outward-facing edge intersects with the first groove;
(iii) the inward-facing edge of the outward-facing portion of the first block is unchamfered at a location where the inward-facing edge intersects with the first groove; and
(iv) the outward-facing edge of the inward-facing portion of the second block is unchamfered at a location where the outward-facing edge intersects with the first groove.

8. The tire of claim 7, wherein the first angle is different from the second angle, preferably by at least 2°, more preferably by at least 4°.

9. The tire of any one of claims 7 to 8, wherein the first angle is at least 118° and at most 124°, preferably 121°, and the second angle is at least 122° and at most 128°, preferably 125°.

10. The tire of any one of the preceding claims, wherein at least one of the inward-facing edges or the outward-facing edges of each of the first and second block comprise a discontinuity in circumferential direction such that the respective inward-facing or outward-facing edges are separated into a respective a first edge portion and a respective second edge portion.

11. The tire of claim 10, wherein the respective first edge portion and the respective second edge portion are axially offset by a step.

12. The tire of claim 11, wherein the step has a width measured in axial direction of at least 0.5 mm and at most 2 mm.

13. The tire of any one of claims 10 to 12, wherein the first edge portion makes up at least 40% and at most 70%, preferably at least 50% and at most 60%, of the length of the respective edge, and/or wherein the second edge portion makes up at least 30% and at most 60%, preferably at least 40% and at most 50%, of the length of the respective edge,
more preferably wherein the second edge portion comes into contact with the ground before the first edge portion, when the tire rolls in forward direction.

14. The tire of any one of claims 10 to 13, wherein an inclination angle with the equatorial plane of the first edge portion differs from an inclination angle with the equatorial plane of the second edge portion, preferably by at least 2°, more preferably by at least 5°.

15. The tire of any one of claims 10 to 14, wherein the first edge portion is inclined with respect to the equatorial plane by at least 10° and at most 15°, preferably at least 12° and at most 14°, more preferably at least 13° and at most 13.5°.

16. The tire of any one of claims 10 to 15, wherein the second edge portion is inclined with respect to the equatorial plane by at least 5° and at most 10°, preferably at least 6° and at most 8°, more preferably at least 6.5° and at most 7°.

17. The tire of any one of the preceding claims, wherein the outward-facing portion of the first block is located adjacent to a shoulder of the tire, wherein the outward-facing portion of the first block comprises at least four sipes, and wherein the inward-facing portion of the first block comprises less than four sipes.

18. The tire of claim 17, wherein the first block further comprises a third block portion located axially inwardly with respect to the inward-facing portion of the first block, wherein the inward-facing portion of the first block comprises three sipes, and the third block portion comprises less than three, preferably two, sipes.

19. The tire of claim 18, wherein
(i) the sipes in the outward-facing portion of the first block are arranged substantially parallel to an edge of the outward-facing portion of the first block facing the first groove,
(ii) the sipes in the inward-facing portion of the first block are arranged substantially parallel to an edge of the inward-facing portion of the first block facing the first groove, and/or
(iii) the sipes in the third block portion of the first block are arranged substantially parallel to an edge of the third block portion of the first block facing the first groove.

20. The tire of any one of claims 18 to 19, wherein the sipes in the inward-facing portion of the first block extend at least partly into the third block portion of the first block.

21. The tire of any one of claims 18 to 20, wherein a separation between the third block portion and the inward-facing portion of the first block is defined by either one of:
a recess in at least one edge of the first block facing the first groove;
a change in inclination angle of the at least one edge of the first block facing the first groove to the equatorial plane;
the direction or magnitude of curvature of the at least one edge facing the first groove;
a stepwise increase or decrease in chamfer width along the at least one edge facing the first groove;
a groove extending through the first block in substantial circumferential direction; or
a combination thereof.
